Europäisches Patentamt

European Patent Office

Office européen des brevets

(19)

(11) Publication number: **0 073 174**
**B1**

(12) EUROPEAN PATENT SPECIFICATION

(45) Date of publication of patent specification: **02.01.86**

(51) Int. Cl.⁴: **C 08 J 5/10, C 08 L 21/00**

(21) Application number: **82630083.2**

(22) Date of filing: **20.08.82**

(54) Composite of rubber and metal reinforcement therefor.

(30) Priority: **25.08.81 US 296027**

(43) Date of publication of application:
**02.03.83 Bulletin 83/09**

(45) Publication of the grant of the patent:
**02.01.86 Bulletin 86/01**

(84) Designated Contracting States:
**DE FR GB**

(56) References cited:
**EP-A-0 065 476**
**FR-A-2 120 890**
**GB-A-1 449 844**

(73) Proprietor: **THE GOODYEAR TIRE & RUBBER COMPANY**
**1144 East Market Street**
**Akron, Ohio 44316 (US)**

(72) Inventor: **Mowdood, Syed Khawja**
**573 Cliffside Drive**
**Akron Ohio 44313 (US)**

(74) Representative: **Weyland, Joseph Jean Pierre**
**Goodyear International Tire Technical Center**
**Patent Department Avenue Gordon Smith**
**L-7750 Colmar-Berg (LU)**

Courier Press, Leamington Spa, England.

## Description

### Field of invention

This invention relates to the adhesion of metal and/or alternately, organic or inorganic fibers, to elastomers. The invention particularly relates to a composite of rubber and wire filament or cabled filaments in the form of a cord or fiber as reinforcement therefor. The invention further relates to a composite of sulfur cured rubber and tire cord, composed of at least one metallic-plated steel filament as a reinforcement therefor, and particularly to a pneumatic or semi-pneumatic rubber tire containing such reinforcement. The invention additionally relates to rubber industrial power transmission belts, conveyor belts and to rubber hose containing such reinforcement.

### Background of the invention

Adhesion of rubber to metal or organic or inorganic fibers has, for a long time, been the subject of considerable experimentation and research. Various solutions have been suggested and have provided various degrees of success.

For example, various physical configurations of cables wire filaments have been used to enhance physical or mechanical adhesion to rubber. Also, the surface of wire filaments has been treated by various materials and methods to enhance adhesion to rubber. Further various materials have been mixed with the rubber itself in an effort to increase its adhesion to a cord of cabled wire filaments or organic fiber filaments.

In one aspect, boric acid, orthoboric acid, lead borate, sodium borate, and cobalt borate have been taught to be useful for aiding in the bonding of rubber to brass, bronze, iron, aluminum, and titanium. For example, see British Patent No. 1,338,930. Also, certain triazine compounds (DE—A 2,318,283 and US—A 3,517,722) and benzoic or hydroxy benzoic acids (DE—A 2,527,574) have been taught or suggested for bonding rubber to steel or copper alloys.

Such rubber-metal reinforced composites are often applicable to the construction of pneumatic tires, industrial belts and hose.

However, even with the extensive amount of work and suggested solutions, methods of enhancing adhesion or rubber to metal or, alternately, organic and inorganic fibers are still being sought.

### Disclosure and practice of the invention

In accordance with this invention, a composite is provided of sulfur-vulcanized rubber composition containing zinc oxide, carbon black, optionally and/or mineral fillers such as clay and/or precipitated silica, cure accelerators, stearic acid or zinc stearate and filament reinforcement therefor which is selected from at least one of metal organic and inorganic filaments, optionally as a multiple of filaments cabled together to form a cord, characterized in that said rubber composition contains from 0.1 to 10 preferably 0.2 to 5 parts by weight per 100 parts by weight rubber (phr) of a compound selected from diallyl phthalate, diallyl isophthalate and low molecular weight homopolymer thereof, diallyl terephthalate, diallyl itaconate, N,N'-diallyl tartardiamide, N,N'-diallyl melamine, diallyl adipate, diallyl succinate, diallyl sebacate, diallyl oxalate, diallyl maleate, diallyl azelate, triallyl trimellitate, triallyl citrate, and triallyl orthoformate, triallyl borate, trimethylol propane trimethacrylate, divinyl benzene and diallyl malonate, but not containing from about 0.1 to about 10 phr of at least one borate as the product of (i) a metal selected from Group IA, IIA, IIB, IVA, IVB and VIII of the Periodic Table of Elements, and (ii) an acid selected from boric, orthoboric, metaboric or polyboric acid, as pursuant to EP—A—0065476 published on November 24th, 1982 (Art. 54(3) EPC).

In the practice of this invention, the following compounds are preferred: diallyl phthalate, diallyl isophthalate and low molecular weight homopolymers thereof, diallyl terephthalate, diallyl itaconate, triallyl orthoformate, triallyl trimellitate and triallyl citrate.

In further accordance with this invention, such a composite is provided of the sulfur-vulcanized rubber composition and, preferably containing therein as reinforcement therefor metal filaments, optionally as a multiple of filaments cabled together as a cord, where said metal filament is composed of a steel filament having a microscopically thin metallic coating thereon comprised primarily of brass and/or zinc.

It is appreciated that such metallic-coated steel filament can optionally also have a thin overcoat thereon of protective compound such as, for example, benzotriazole or similarly protective compound.

In further accordance with this invention, a pneumatic and/or semi-pneumatic rubber tire is provided typically having a generally toroidal shape and comprised of a general construction containing a tread, spaced inextensible beads and sidewalls connecting said beads and tread and with a supporting carcass therefor, where said carcass is a metal filament-reinforced sulfur-cured rubber composite of this invention.

In addition, in accordance with this invention, an industrial article of manufacture is provided selected from at least one of industrial conveyor belt, power transmission belt and hose which are, at least in part, constructed of the metal filament-reinforced sulfur-vulcanized rubber composite of this invention.

It is understood that other conventional materials can be used in the compounding of the rubber which include antidegradants, tackifying resins of the non-reactive type, peptizers, fillers and/or pigments and processing oils. Although it is related herein that the various mineral fillers can be used, usually the carbon black is preferred.

2

For the compounding of the rubber and the preparation of the wire/rubber composite, the compounding materials are simply mixed together to form the compounded rubber and applied to the filament or cord thereof, usually in a form of a textile type fabric form, such as by calendering and the resulting composite built into a green tire, industrial belt or hose construction and the product simply molded and cured with the aid of pressure to form the article of manufacture. Generally, the rubber/metal composite is cured at a temperature in the range of about 50°C. to about 200°C.

Various rubbers can be used in the practice of this invention of which unsaturated types are preferred. Representative of such unsaturated rubbers are, for example, at least one of natural rubber, synthetic cis - 1,4 - polyisoprene, polychloroprene, cyclene rubbers, rubbery polymers of 1,3-butadiene, butadiene/styrene copolymers, isoprene/styrene copolymers, epichlorohydrin homo and copolymers with alkylene oxides isoprene/α-methylstyrene copolymers, butadiene/acrylonitrile copolymers, EPDM rubbers, butyl rubbers, halobutyl rubbers, norbornene rubbers, thiokol rubbers and blends thereof with a minor portion of rubbery block copolymers selected from at least one of styrene/isoprene/styrene and styrene/butadiene/styrene block copolymers.

The wire cord itself in the practice of this invention can be composed of 1 to 50 (or more) filaments of steel wire twisted, or cabled together to form the cord.

Therefore, the cord can be monofilament in nature although this is considered rare and at least four filaments are usually preferred. For example, for use in pneumatic rubber tires, cord for passenger tires might be composed of 3 to 6 cabled filaments, cord for truck tires 10 to 30 cabled filaments and cord for giant earthmover vehicle tires 40 to 50 cabled filaments.

It is generally preferred that the steel filaments themselves are individually coated, or plated, with transition metal or alloy thereof which are preferably microporous, often practically monomolecular representative of which are at least one of those selected from brass, zirconium, cerium, lanthanum, nickel, cobalt, tin, titanium, zinc, copper and bronze. Generally, an outer monomolecular, microporous layer of zinc is suitable over a very thin brass plate on the steel wire.

It is recognized that the steel wire can be plated or coated with the metal or metal alloy such as brass, preferably alpha brass, and/or transition metal or alloy by various methods to obtain a thin, preferably a practically monomolecular coat and usually somewhat microporous in nature. For example, electro deposition can be effected by passing the wire through a charged electrolyte bath.

It may also be feasible to use a vapor deposition technique to plate the wire.

The metal coating on the steel is generally microscopically porous, thereby understood to expose small areas of steel surface.

It is not reasonably practical to describe within rigid limits the metal plating on the steel wire. Optimum thicknesses and amounts can be a function of variables such as nature of the brass, zinc, or brass-zinc or metal alloy surface, mode of deposition, thickness of initial oxide layers, magnitude of residual stresses, copper content, brass thickness, as well as the reactivity of the rubber vulcanization system.

The steel wire can relate generally to what is known as carbon steel, also called ordinary steel, also called straight carbon steel or plain carbon steel, e.g., American Iron and Steel Institute Grade 1070 high carbon steel (AISI 1070). Such steel owes its properties chiefly to the presence of carbon without substantial amounts of other alloying elements. In this respect see Metals Handbook, The American Society for Metals, Metals Park.

Brass generally and preferably relates to compositions in which the major component is alpha brass, i.e., which contain from about 62 to 75 percent copper and 38 to 25 percent zinc, respectively.

The cross-linkable monomer can be mixed with the rubber and its compounding ingredients by conventional procedures prior to application to the metal filament (wire) or organic or inorganic fibers.

As hereinbefore pointed out, the plated wire may contain a coating of protective material such as benzotriazole and the like prior to application of the compounded rubber. Such protective agent coatings are those which are believed to somewhat interact with copper in a brass coating on the steel wire to form a polymeric complex of agent plus copper and/or zinc. This polymeric complex is insoluble in most solvents and serves as a protective barrier to environmental degradation of the underlying brass.

The practice of the present invention has been observed to result in improved aged rubber-metal adhesion, in many cases with improved initial, i.e., original adhesion of vulcanized brass-coated steel/rubber composites.

The practice of this invention is further illustrated by reference to the following example which is intended to be representative rather than restrictive of the scope of the invention. Unless otherwise indicated, all parts and percentages are by weight.

Example I

A compounded rubber was prepared as a control by mixing cis - 1,4 - polyisoprene rubber with various compounding ingredients which included the materials shown in the following Table 1 and the compound (compounded rubber) identified herein as Control X.

3

**0 073 174**

TABLE 1

| Composition (PHR) | Control X | Control Y |
|---|---|---|
| Polyisoprene rubber | 100 | 100 |
| Stearic acid | 2.0 | — |
| Oleic acid | — | 2.0 |
| Zinc oxide | 8.0 | 8.0 |
| Antidegradants | 0.75 | 1.5 |
| Carbon black | 60.0 | 65.0 |
| Tackifying resin and processing oil | 4.0 | 3.5 |
| Resorcinol and hexamethoxy methyl melamine | 4.0 | 4.0 |
| Sulfur | 4.0 | 5.2 |
| Accelerator, sulfenamide-type | 1.0 | 0.65 |
| Cobalt salt of organic acid (10—11% Co) | 3.0 | 1.75 |
| Retarder | 0.2 | — |

The recipe for the Control X compounded rubber was modified as shown in Tables 2, 3 and 4 and compounded rubber samples prepared thereby in experiments identified herein as experiments or Example A in Table 2, Examples B—G in Table 3, and Examples H—J in Table 4. The recipe for Control Y was modified as shown in Table 5 with Examples K—N.

TABLE 2

| Compounds added to control X recipe | Control X | A |
|---|---|---|
| Diallyl phthalate | — | 1.8 |
| Adhesion (SBAT) | | |
| Pullout force in Newtons | | |
| (lb in brackets) | | |
| i) Original adhesion | 1167 (263) | 1187 (267) |
| ii) Humid aged (10 days/ 77) C/98% RH) | 687 (154) | 834 (187) |
| iii) Salt aged (5% NaCl/$H_2O$/ 48 hrs/90°C) | 716 (160) | 1070 (240) |
| iv) Oven aged (7 days/$N_2$/121°C) | 844 (190) | 903 (202) |

4

## TABLE 3

| Composition (PHR) | Control X | B | C | D | E | F | G |
|---|---|---|---|---|---|---|---|
| Diallyl isophthalate | — | 0.75 | — | — | — | — | — |
| Diallyl isophthalate Homopolymer, low molecular weight | — | — | 1.0 | — | — | — | — |
| Diallyl terephthalate | — | — | — | 1.0 | — | — | — |
| Diallyl itaconate | — | — | — | — | 1.0 | — | — |
| N,N'-Diallyl tartardiamide | — | — | — | — | — | 1.0 | — |
| N,N'-Diallyl melamine | — | — | — | — | — | — | 0.6 |
| Adhesion (TCAT, pullout force in Newtons) | | | | | | | |
| i) Original adhesion: | 574 | 582 | 597 | 589 | 615 | 614 | 609 |
| ii) Aged adhesion (10 days/$H_2O$/90°C) | 429 | 566 | 500 | 583 | 663 | 494 | 443 |

## TABLE 4

| Composition (PHR) | Control X | H | I | J |
|---|---|---|---|---|
| Triallyl orthoformate | — | 1.0 | — | — |
| Triallyl trimellitate | — | — | 1.0 | — |
| Triallyl citrate | — | — | — | 1.0 |
| Adhesion (TCAT, pullout force in Newtons) | | | | |
| i) Original adhesion | 574 | 544 | 551 | 576 |
| ii) Aged adhesion (10 days/$H_2O$/90°C) | 429 | 618 | 592 | 610 |

## TABLE 5

| Composition (PHR) | Control Y | K | L | M | N |
|---|---|---|---|---|---|
| Triallyl orthoformate | — | 1.0 | — | — | — |
| Triallyl trimellitate | — | — | 1.0 | — | — |
| Triallyl citrate | — | — | — | 1.0 | — |
| Diallyl terephthalate | — | — | — | — | 1.0 |
| Adhesion (TCAT, pullout force in Newtons) | | | | | |
| i) Original adhesion | 549 | 542 | 551 | 526 | 540 |
| ii) Aged adhesion (10 days/$H_2O$/90°C) | 255 | 532 | 268 | 487 | 335 |

While certain representative embodiments and details have been shown for the purpose of illustrating the invention, it will be apparent to those skilled in this art that various changes and modifications may be made therein without departing from the spirit of scope of the invention.

## Claims

1. A composite of rubber composition containing zinc oxide, carbon black, optionally and/or mineral fillers, cure accelerator(s), stearic acid or zinc stearate, and containing filament reinforcement therefor, where said rubber composition is sulfur-cured with said reinforcement and where said filament is selected from at least one of metal, organic and inorganic filaments, optionally as a multiple of filaments cabled together to form a cord characterized in that said rubber composition contains 0.1 to 10 parts by weight per 100 parts by weight rubber (phr) of a compound selected from at least one of diallyl phthalate, diallyl isophthalate and low molecular weight homopolymer thereof, diallyl terephthalate, diallyl itaconate, N,N'-diallyl tartardiamide, N,N'-diallyl melamine, diallyl adipate, diallyl succinate, diallyl sebacate, diallyl oxalate, diallyl maleate, diallyl azelate, triallyl trimellitate, triallyl citrate, and triallyl orthoformate, triallyl borate, trimethylol propane trimethacrylate, divinyl benzene and diallyl malonate, but not containing from about 0.1 to about 10 phr of at least one borate as the product of (i) a metal selected from Group IA, IIA, IIB, IVA, IVB and VIII of the Periodic Table of Elements, and (ii) an acid selected from boric, orthoboric, metaboric or polyboric acid.

2. The composite of Claim 1 where said reinforcement is composed of at least one steel filament or cord of cabled filaments having a microscopically thin metallic coating thereon composed primarily of brass and/or zinc.

3. The composite of Claim 1 or 2 where said compound is selected from at least one of diallyl phthalate, diallyl isophthalate and low molecular weight homopolymers thereof, diallyl terephthalate, dially itaconate, triallyl orthoformate, triallyl trimellitate and triallyl citrate.

4. The composite of Claim 2, where said steel filament has an outer, thin, practically monomolecular microporous metal coating thereon selected from at least one of zirconium, cerium, lanthanum, nickel, cobalt, tin, titanium, zinc, copper, brass and bronze plated on the steel wire.

5. The composite of Claim 4 where said steel filament is brass coated and the brass coat itself has an outer coat of zinc.

6. The composite of Claim 2 or 5 where said steel is carbon steel and the major component of said brass is alpha brass.

7. The composite of Claim 2 or 4 where said wire filament has a protective overcoat of benzotriazole.

8. The composite of Claims 1, 2 or 3 where said rubber is selected from at least one of natural rubber, synthetic cis - 1,4 - polyisoprene, polychloroprene, cyclene rubbers, rubbery polymers derived from 1,3-butadiene, butadiene/styrene copolymers, isoprene/styrene copolymers, epichlorohydrin homo and copolymers with alkylene oxides, isoprene/α-methyl styrene copolymers, butadiene/acrylonitrile copolymers, EPDM rubber, butyl rubbers, halobutyl rubbers, norbornene rubber, thiokol rubbers, and blends thereof.

9. A pneumatic or semi-pneumatic rubber tire having a generally torroidal shape and comprised of a general construction containing a tread, spaced inextensible beads and sidewalls connecting said bead and tread and with a supporting carcass therefor, where said carcass is a cord-reinforced rubber composite according to anyone of Claims 1 to 8.

10. The rubber tire of Claim 9 where said cord is composed of about 2 to about 50 cabled metal-plated steel filaments.

11. An industrial article of manufacture selected from at least one of industrial conveyor belt, power transmission belt and hose which are, at least in part constructed of the cord-reinforced rubber composite as claimed in anyone of Claims 1 to 8.

## Patentansprüche

1. Verbund aus einer Kautschukmasse, enthaltend Zinkoxid, Ruß, gegebenenfalls und/oder mineralische Füllstoffe, Härtungsbeschleuniger, Stearinsäure oder Zinkstearat sowie einer Filamentverstärkung dafür, wobei die Kautschukmasse mit der Verstärkung Schwefel-vulkanisiert ist, und das Filament ausgewählt wird aus wenigstens einem Filament aus Metall, einem organischen und anorganischen Material, wobei gegebenenfalls mehrere Filamente in Frage kommen, die unter Bildung eines Cords miteinander mehrfach gezwirnt sind, dadurch gekennzeichnet, daß die Kautschukmasse 0,1 bis 10 Gew.-Teile pro 100 Gew.-Teile Kautschuk (phr) einer Verbindung enthält, ausgewählt aus wenigstens einer der Verbindungen, Diallylphthalat, Diallylisophthalat und Homopolymeren davon mit niederem Molekulargewicht, Diallylterephthalat, Diallylitaconat, N,N'-Diallyltartardiamid, N,N'-Diallylmelamin, Diallyladipat, Diallylsuccinat, Diallylsebacat, Diallyloxalat, Diallylmaleat, Diallylazelat, Triallyltrimellitat, Triallylcitrat und Triallylorthoformiat, Triallylborat, Trimethylolpropantrimethycrylat, Divinylbenzol und Diallylmalonat, wobei die Masse jedoch nicht ungefähr 0,1 bis 10 phr wenigstens eines Borats als Produkt von (i) einem Metall, ausgewählt aus den Gruppen IA, IIA, IIB, IVA, IVB und VIII des Periodischen Systems der Elemente und (ii) einer Säure, ausgewählt aus Borsäure, Orthoborsäure, Metaborsäure oder Polyborsäure, enthält.

2. Verbund nach Anspruch 1, dadurch gekennzeichnet, daß die Verstärkung aus wenigstens einem Stahlfilament oder einem Cord aus mehrfach verzwirnten Filamenten mit einem mikroskopisch dünnen metallischen Überzug darauf, der hauptsächlich aus Messing und/oder Zink besteht, zusammengesetzt ist.

3. Verbund nach Anspruch 1 oder 2, dadurch gekennzeichnet, daß die Verbindung ausgewählt ist aus wenigstens einer der Verbindungen Diallylphthalat, Diallylisophthalat sowie Homopolymeren davon mit niederem Molekulargewicht, Diallylterephthalat, Diallylitaconat, Triallylorthoformiat, Triallyltrimellitat und Triallylcitrat.

4. Verbund nach Anspruch 2, dadurch gekennzeichnet, daß das Stahlfilament einen äußeren dünnen praktisch monomolekularen mikroporösen Metallüberzug aufweist, ausgewählt aus einem der Elemente Zirkonium, Cer, Lanthan, Nickel, Kobalt, Zinn, Titan, Zink, Kupfer, Messing und Bronze, aufplattiert auf dem Stahldraht.

5. Verbund nach Anspruch 4, dadurch gekennzeichnet, daß das Stahlfilament mit Messing überzogen ist und der Messingüberzug selbst einen äußeren Überzug aus Zink besitzt.

6. Verbund nach Anspruch 2 oder 5, dadurch gekennzeichnet, daß der Stahl aus nichtlegiertem Stahl besteht und die Hauptkomponente des Messings α-Messing ist.

7. Verbund nach Anspruch 2 oder 4, dadurch gekennzeichnet, daß das Stahlfilament einen Schutzüberzug aus Benzotriazol besitzt.

8. Verbund nach Anspruch 1, 2 oder 3, dadurch gekennzeichnet, daß der Kautschuk ausgewählt wird aus wenigstens einem der Bestandteile Naturkautschuk, synthetischem cis - 1,4 - Polyisopren, Polychloropren, einem Cyclenkautschuk, einem kautschukartigen Polymeren, fas auf 1,4-Butadien zurückgeht, einem Butadien/Styrol-Copolymeren, einem Isopren/Styrol-Copolymeren, einem Epichlorhydrinhomo- und -copolymeren mit Alkylenoxiden, einem Isopren/α-Methylstyrol-Copolymeren, einem Butadien/Acrylnitril-Copolymeren, EPDM-Kautschuk, Butylkautschuk, Halogenbutylkautschuk, Norbornenkautschuk, einem Thiokolkautschuk sowie Mischungen davon.

9. Pneumatischer oder halbpneumatischer Kautschukreifen mit einer allgemeinen toroidalen Form aus einer allgemeinen Konstruktion, die eine Lauffläche, in einem Abstand angebrachte und nichtausdehnbare Wülste und Seitenwände, welche den Wulst mit der Lauffläche verbinden, sowie eine stützende Karkasse dafür aufweist, dadurch gekennzeichnet, daß die Karkasse ein Cord-verstärkter Kautschukverbund gemäß einem der Ansprüche 1 bis 8 ist.

10. Kautschukreifen nach Anspruch 9, dadurch gekennzeichnet, daß der Cord aus ungefähr 2 bis ungefähr 50 mehrfach miteinander verzwirnten Metall-plattierten Stahlfilamenten besteht.

11. Industrieller Herstellungsgegenstand, ausgewählt aus wenigstens einem der folgenden: einem Industrieförderband, einem Kraftübertragungsband und einem Schlauch, wobei diese Gegenstände wenigstens teilweise aus dem Cord-verstärkten Kautschukverbund gemäß einem der Ansprüche 1 bis 8 hergestellt worden sind.

## Revendications

1. Structure composite d'une composition de caoutchouc contenant de l'oxyde de zinc, du noir de carbone et/ou facultativement des charges minérales, un ou plusieurs accélérateurs de vulcanisation, de l'acide stéarique ou du stéarate de zinc, avec un renforcement de filaments, cette composition de caoutchouc étant vulcanisée au soufre avec ce renforcement et les filaments étant choisis parmi au moins un des éléments que constituent les filaments métalliques, les filaments organiques et les filaments inorganiques, éventuellement sous forme de plusieurs filaments assemblés pour former un câblé, caractérisée en ce que cette composition de caoutchouc contient 0,1 à 10 parties en poids (par 100 parties en poids de caoutchouc) d'un composé choisi parmi au moins un des composés suivants: le phtalate de diallyle, l'isophtalate de diallyle et son homopolymère de fiable poids moléculaire, le téréphtalate de diallyle, l'itaconate de diallyle, le N,N'-diallyl-tartardiamide, la N,N'-diallyl-mélamine, l'adipate de diallyle, le succinate de diallyle, le sébaçate de diallyle, l'oxalate de diallyle, le maléate de diallyle, l'azélate de diallyle, le trimellitate de triallyle, le citrate de triallyle et l'orthoformiate de triallyle, le borate de triallyle, le triméthacrylate de triméthylol-propane, le divinyl-benzène et le malonate de diallyle, sans cependant contenir environ 0,1 à environ 10 parties (par 100 parties de caoutchouc) d'au moins un borate qui est le produit de (i) un métal choisi parmi les groupes IA, IIA, IIB, IVA, IVB et VIII du Tableau Périodique des Eléments, et (ii) un acide choisi parmi l'acide borique, l'acide orthoborique, l'acide métaborique ou l'acide polyborique.

2. Structure composite selon la revendication 1, dans laquelle le renforcement est constitué d'au moins un filament d'acier ou d'un câblé de filaments assemblés comportant un revêtement métallique microscopiquement mince constitué principalement de laiton et/ou de zinc.

3. Structure composite selon la revendication 1 ou 2, dans laquelle le composé est choisi parmi au moins un des composés suivants: le phtalate de diallyle, l'isophtalate de diallyle et ses homopolymères de fiable poids moléculaire, le téréphtalate de diallyle, l'itaconate de diallyle, l'orthoformiate de triallyle, le trimellitate de triallyle et le citrate de triallyle.

4. Structure composite selon la revendication 2, dans laquelle le filament d'acier comporte un mince revêtement métallique extérieur pratiquement monomoléculaire et microporeux choisi parmi au moins un des éléments suivants: le zirconium, le cérium, le lanthane, le nickel, le cobalt, l'étain, le titane, le zinc, le cuivre, le laiton et le bronze, déposé sur le fil d'acier.

5. Structure composite selon la revendication 4, caractérisée en ce que le filament d'acier comporte un revêtement de laiton, tandis que le revêtement de laiton lui-même comporte un revêtement extérieur de zinc.

6. Structure composite selon la revendication 2 ou 5, dans laquelle l'acier est l'acier au carbone, tandis que le composant majeur du laiton est le laiton alpha.

7. Structure composite selon la revendication 2 ou 4, dans laquelle le filament métallique comporte un revêtement supérieur protecteur de benzotriazole.

8. Structure composite selon la revendication 1, 2 ou 3, dans laquelle le caoutchouc est choisi parmi au moins un des caoutchoucs suivants: le caoutchouc naturel, les caoutchoucs synthétiques de cis - 1,4 - polyisoprène, de polychloroprène et de cyclène, les polymères caoutchouteux dérivant du 1,3-butadiène, les copolymères de butadiène/styrène, les copolymères d'isoprène/styrène, les homopolymères et les copolymères d'épichlorhydrine avec des oxydes d'alkylène, les copolymères d'isoprène/α-méthylstyrène, les copolymères de butadiène/acrylonitrile, le caoutchouc EPDM, les caoutchoucs butyle, les caoutchoucs halobutyle, le caoutchouc de norbornène, les caoutchoucs Thiocol, ainsi que leurs mélanges.

9. Bandage pneumatique ou semi-pneumatique en caoutchouc ayant une forme généralement toroïdale et réalisé en une structure générale comprenant une bande de roulement, des talons inextensibles espacés et des flancs reliant ces talons et cette bande de roulement avec une carcasse support, caractérisé en ce que cette carcasse est une structure composite de caoutchouc renforcée par un câblé selon l'une quelconque des revendications 1 à 8.

10. Bandage pneumatique en caoutchouc selon la revendication 9, caractérisé en ce que le câblé est constitué d'environ 2 à environ 50 filaments d'acier assemblés et comportant un revêtement métallique.

11. Article industriel manufacturé choisi parmi au moins une courroie transporteuse, une courroie de transmission et un tuyau qui, du moins en partie, sont constitués d'une structure composite de caoutchouc renforcée par un câblé selon l'une quelconque des revendications 1 à 8.